(19) **Europäisches Patentamt / European Patent Office / Office européen des brevets**

(11) **EP 4 236 034 A1**

(12) **EUROPEAN PATENT APPLICATION**
published in accordance with Art. 153(4) EPC

(43) Date of publication:
**30.08.2023 Bulletin 2023/35**

(21) Application number: **20963191.0**

(22) Date of filing: **09.12.2020**

(51) International Patent Classification (IPC):
**H02K 1/12** (2006.01)

(86) International application number:
**PCT/CN2020/134782**

(87) International publication number:
**WO 2022/110303 (02.06.2022 Gazette 2022/22)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.11.2020 CN 202011376547**
**07.12.2020 CN 202011415684**

(71) Applicant: **Anhui Meizhi Precision Manufacturing Co., Ltd.**
**Anhui 241000 (CN)**

(72) Inventors:
• **XU, Fei**
**Wuhu, Anhui 241000 (CN)**
• **QIU, Xiaohua**
**Wuhu, Anhui 241000 (CN)**
• **JIANG, Bo**
**Wuhu, Anhui 241000 (CN)**

(74) Representative: **RGTH**
**Patentanwälte PartGmbB**
**Neuer Wall 10**
**20354 Hamburg (DE)**

(54) **STATOR SHEET, STATOR CORE, MOTOR, COMPRESSOR, AND REFRIGERATION DEVICE**

(57) Disclosed are a stator lamination (100), a stator core, an electric motor, a compressor (300), and a refrigeration device. The stator lamination (100) includes: a stator yoke (110), where the stator yoke (110) has an annular structure; and a plurality of stator teeth (120) arranged on an inner ring of the stator yoke (110). The stator tooth (120) includes: a tooth root (122) connected to the stator yoke (110), and a tooth crown (124) connected to the tooth root (122), where in a circumferential direction of the stator yoke (110), two ends of the tooth crown (124) are a first end (130) and a second end (132) respectively; and at least one tooth crown (124) is provided with a magnetic conduction portion (140), and in the circumferential direction of the stator yoke (110), a shortest distance between one side, facing the first end (130), of a contour of the magnetic conduction portion (140) facing away from the tooth root (122) and the first end (130) is smaller than a shortest distance between one side, facing the second end (132), of the contour of the magnetic conduction portion (140) facing away from the tooth root (122) and the second end (132). According to the stator lamination (100), a magnetic field is dispersed by means of the magnetic conduction portion (140), such that voltage drop in a magnetic circuit at the first end (130) is increased, a local saturation effect is reduced, superposition of radial forces of a rotor (310) at a corresponding frequency is improved, radial vibration of the rotor (310) is reduced, and noise of the electric motor is reduced.

Fig. 1

# Description

The present application claims the priority to Chinese patent application No. 202011376547.3, filed with Chinese Patent Office on November 30, 2020 and entitled "Stator lamination, stator core, electric motor, compressor, and refrigeration device", and Chinese patent application No. 202011415684.3, filed with Chinese Patent Office on December 07, 2020 and entitled "Stator lamination, stator core, electric motor, compressor, and refrigeration device", which are incorporated in their entireties herein by reference.

## FIELD

The present application relates to the field of electric motors, and particularly relates to a stator lamination, a stator core, an electric motor, a compressor, and a refrigeration device.

## BACKGROUND

In the related art, an electric motor of a rotary direct-current variable-frequency compressor is generally a built-in permanent magnet motor. In recent years, a power density of the electric motor has been increased, and lower vibration noise of the electric motor is required accordingly. However, electric motors in the prior art are increasingly unable to fulfill a silence requirement.

## SUMMARY

The present application aims to at least solve one of technical problems in the prior art.

In view of this, a first aspect of the present application provides a stator lamination.

A second aspect of the present application provides a stator core.

A third aspect of the present application provides an electric motor.

A fourth aspect of the present application provides a compressor.

A fifth aspect of the present application provides a refrigeration device.

In view of this, according to the first aspect of the present application, the present application provides a stator lamination. The stator lamination includes: a stator yoke, where the stator yoke has an annular structure; and a plurality of stator teeth arranged on an inner ring of the stator yoke. The stator tooth includes: a tooth root connected to the stator yoke, and a tooth crown connected to the tooth root, where along a circumferential direction of the stator yoke, two ends of the tooth crown are a first end and a second end respectively; and at least one tooth crown is provided with a magnetic conduction portion, and along the circumferential direction of the stator yoke, a shortest distance between the first end of the tooth crown and a contour line of the magnetic conduction portion facing away from the tooth root and facing toward the first end of the tooth crown is smaller than a shortest distance between the second end of the tooth crown and a contour line of the magnetic conduction portion facing away from the tooth root and facing toward the second end of the tooth crown.

The stator lamination provided by the present application includes the stator yoke and the stator teeth, where the entire stator yoke has an annular structure, and the plurality of stator teeth are evenly distributed on the inner ring of the stator yoke. That is, stator slots are provided between the stator teeth to facilitate arrangement of windings.

In an embodiment, the stator tooth includes the tooth root and the tooth crown, the first end of the tooth root is connected to the stator yoke, the second end of the tooth root is connected to the tooth crown, and the first end and the second end are two opposite ends.

Along a circumferential side of the stator yoke, an end face of one side of the tooth crown facing away from the tooth root includes a first tooth surface and a second tooth surface. That is, after an electric motor is assembled, along a rotatable direction of a rotor, the end face of the side of the tooth crown facing away from the tooth root includes the first tooth surface and the second tooth surface. In an embodiment, the first tooth surface and the second tooth surface are distributed clockwise or counterclockwise.

In addition, at least one tooth crown is provided with the magnetic conduction portion. Along the circumferential direction of the stator yoke, the shortest distance between the contour line of the magnetic conduction portion facing away from the tooth root and facing the first end of the tooth crown and the first end of the tooth crown is smaller than the shortest distance between the contour line of the magnetic conduction portion facing away from the tooth root and facing the second end of the tooth crown and the second end of the tooth crown.

In an embodiment, after the electric motor is assembled, the rotor rotates from the first end to the second end. Further, the magnetic conduction portion is close to the first end, that is, is close to an area where the rotor initially enters the stator tooth. A magnetic field is further dispersed by using the magnetic conduction portion, voltage drop in a magnetic circuit at the first end is further increased, a local saturation effect is further reduced, and distortion of an air-gap magnetic field is weakened, and even harmonics of an armature magnetic field are suppressed, radial electromagnetic waves generated through interaction between the harmonics of the armature magnetic field and harmonics of a magnetic field of the rotor are significantly reduced, further vibration noise of the compressor in key frequency bands is reduced, and noise of the electric motor is reduced.

In addition, the stator lamination in the embodiment provided by the present application may further have the following additional technical features:

In a further possible design, along a direction from the first end to the second end, the end face of one side of the tooth crown facing away from the tooth root includes the first tooth surface and the second tooth surface, the first end is located at an edge of the first tooth surface, the second tooth surface includes at least one section of a second arc surface, and an axis of the second arc surface is not coincident with an axis of an inscribed circle of the plurality of stator teeth.

In the design, the axis of the second tooth surface is not coincident with the axis of the inscribed circle of the plurality of stator teeth, and an air gap between the second tooth surface and the rotor is changeable. In this way, it is ensured that an air gap flux density is changeable and a radial force generated for the rotor under the same air gap flux density is reduced.

In a further possible design, the shortest distance between the contour line of the magnetic conduction portion facing away from the tooth root and facing the second end of the tooth crown and the first end of the tooth crown is smaller than the shortest distance between the contour line of the magnetic conduction portion facing away from the tooth root and facing toward the second end of the tooth crown and the second end of the tooth crown.

In the design, the magnetic conduction portion is further limited to be completely located at one side from a center line of the tooth root to the first end, and a radial electromagnetic force received by the rotor when the rotor initially enters the stator tooth is further ensured, and a noise reduction effect is further improved.

In a further possible design, the magnetic conduction portion is conductive along an axial direction of the tooth crown.

In the design, the magnetic conduction portion is conductive along an axial direction of the stator yoke, which is more conducive to penetration of a magnetic induction line. In this way, distortion of the air-gap magnetic field is further minimized, and the even harmonics of the armature magnetic field are suppressed.

In a further possible design, the magnetic conduction portion includes: a magnetic conduction hole, or a magnetic conduction recess, where an opening of the magnetic conduction recess is located at one side of the tooth crown facing away from the tooth root.

In the design, the magnetic conduction portion may be the magnetic conduction hole, which is a channel provided on the tooth crown along the axial direction of the stator yoke, and the side of the tooth crown facing away from the tooth root is complete.

The magnetic conduction portion may be the magnetic conduction recess, that is, a recess is provided on one side of the tooth crown facing the axis of the inscribed circle of the plurality of stator teeth.

In a further possible design, the first tooth surface includes at least one section of a first arc surface, and an axis of the first arc surface is not coincident with the axis of the inscribed circle of the plurality of stator teeth.

In the design, the side of the tooth crown facing the axis of the inscribed circle of the plurality of stator teeth has different axes, and an air gap between the first tooth surface and the rotor is changeable. In this way, even harmonics of an armature magnetic field are further reduced, a radial force on the rotor is further reduced, and noise of the electric motor or compressor is further reduced.

In a further possible design, the first tooth surface includes at least one section of a first arc surface, and an axis of the first arc surface is coincident with the axis of the inscribed circle of the plurality of stator teeth.

In the design, the axis of the first tooth surface is coincident with the axis of the inscribed circle of the plurality of stator teeth, and the air gap between the first tooth surface and the rotor is even, and further an electromagnetic force applied to the rotor is ensured and efficiency of the electric motor is improved. In a further possible design, a ratio of an outer diameter of the stator yoke to a minimum inner diameter defined by end faces of the stator teeth is greater than or equal to 0.5 and smaller than or equal to 0.57.

In the embodiment, the ratio of the outer diameter of the stator yoke to the minimum inner diameter defined by end faces of the stator teeth is greater than or equal to 0.5 and smaller than or equal to 0.57, and material consumption of the stator lamination is reduced and cost of the stator lamination is reduced while it is ensured that the stator lamination has an enough winding space and an enough space for the rotor to be arranged.

In a further possible design, along the direction from the first end to the second end, a distance between the first tooth surface and a center of the inscribed circle of the plurality of stator teeth gradually decreases.

In the design, after the electric motor is assembled, the center of the inscribed circle of the plurality of stator teeth serves as a rotation center of the rotor, and along the direction from the first end to the second end, the distance between the first tooth surface and the rotation center of the rotor gradually decreases. In this way, an air gap when the rotor enters the stator tooth is increased, voltage drop in a magnetic circuit at the first end is further increased, a local saturation effect is further reduced, and distortion of an air-gap magnetic field is weakened, and even harmonics of an armature magnetic field are suppressed, radial electromagnetic waves generated through interaction between the harmonics of the armature magnetic field and harmonics of a magnetic field of the rotor are significantly reduced, further vibration noise of the compressor in key frequency bands is reduced, and noise of the electric motor is reduced.

According to the second aspect of the present application, the present application provides a stator core, which includes at least one stator lamination according to any one of the above embodiments.

The stator core provided by the present application includes the at least one stator lamination according to any one of the above embodiments, so the stator core has all the beneficial effects of the stator lamination according to any one of the above embodiments, which will not be described in details herein.

In a further possible design, the stator core further includes: at least one core lamination, where the core lamination and the stator lamination are stacked along an axial direction of the stator core.

In the design, the stator core may further include core laminations having other structures to improve properties of the electric motor.

In a further possible design, along the axial direction of the stator core, a total height of the stator laminations is L1; and along the axial direction of the stator core, a total height of the core laminations is L2, where $0.001 \leq L1/L2 \leq 0.6$.

In the design, different vibration noise improvement effects on electric motors may be achieved by assembling two types of laminations according to different axial thicknesses. The greater the total height of the stator laminations, the better the noise improvement effect, the greater the total height of the core laminations, and the higher energy efficiency of the electric motor. Both the higher energy efficiency and the better noise reduction effect of the electric motor may be achieved when $0.001 < L2/L1 < 0.6$.

According to the third aspect of the present application, the present application provides an electric motor, which includes the stator core according to any one of the above embodiments, and a rotor rotatably arranged in the stator core.

The electric motor provided by the present application includes the stator core according to any one of the above embodiments, so the electric motor has all the beneficial effects of the stator core according to any one of the above embodiments, which will not be described in details herein.

In the embodiment, further, the rotor rotates in a direction from a first end to a second end of the stator tooth of the stator lamination of the stator core.

In the design, the air gap at the first tooth surface is ensured to be large, and effects of reducing the radial force on the rotor and reducing noise are ensured.

In a further possible design, an inner diameter of the stator core is Di, rated torque of the electric motor is T, and torque per unit volume of the rotor is TPV, where $5.18 \times 10^{-7} \leq T \times Di^{-3} \times TPV^{-1} \leq 1.17 \times 10^{-6}$, and $5 \text{ kN} \cdot \text{m} \cdot \text{m}^{-3} \leq TPV \leq 45 \text{ kN} \cdot \text{m} \cdot \text{m}^{-3}$.

In the design, the inner diameter Di of the stator core, the rated torque T of the electric motor and the torque per unit volume TPV of the rotor satisfy $5.18 \times 10^{-7} \leq T \times Di^{-3} \times TPV^{-1} \leq 1.17 \times 10^{-6}$ and $5 \text{ kN} \cdot \text{m} \cdot \text{m}^{-3} \leq TPV \leq 45 \text{ kN} \cdot \text{m} \cdot \text{m}^{-3}$. Further, a range of combined variables of the rated torque T of the electric motor, the inner diameter Di of the stator core and the torque per unit volume TPV of the rotor is limited, and the electric motor may satisfy a power requirement of a high-intensity environment, in some embodiments, a compressor.

In addition, the structure may effectively reduce magnetic flux leakage of the rotor, increase a use ratio of permanent magnets, and improve efficiency of the electric motor.

In a further possible design, stator slots are formed between adjacent stator teeth of the stator core, and a ratio of a number of the stator slots to 2 times of a number of pole pairs of the rotor is any of the following:

$$\frac{3}{2}, \frac{6}{5}, \text{ and } \frac{7}{6}.$$

In the design, the ratio relation between the number Z of stator slots and the number P of pole pairs of the rotor is limited, and further a pole and slot combination of the electric motor is limited. When Z and $2 \times P$ satisfy $\frac{3}{2}, \frac{6}{5}, \text{ or } \frac{7}{6}$, armature iron loss may be effectively reduced, magnetic flux is improved, and further efficiency of the electric motor is improved.

According to the fourth aspect of the present application, the present application provides a compressor, which includes a stator core according to any one of the above embodiments, or an electric motor according to any one of the above embodiments.

The compressor provided by the present application includes a stator core according to any one of the above embodiments or an electric motor according to any one of the above embodiments, so the compressor has all the beneficial effects of the stator core according to any one of the above embodiments and the electric motor according to any one of the above embodiments, which will not be described in details herein.

According to the fifth aspect of the present application, the present application provides a refrigeration device, which includes a stator core according to any one of the above embodiments, or an electric motor according to any one of the above embodiments, or a compressor according to any one of the above embodiments.

The refrigeration device provided by the present application includes the stator core according to any one of the above embodiments, or the electric motor according to any one of the above embodiments, or the compressor according to any one of the above embodiments, so the refrigeration device has all the beneficial effects of the stator core according to any one of the above embodiments, the electric motor according to any one of the above embodiments, and the compressor according to any one of the above embodiments, which will not be described in details herein.

Additional aspects and advantages of the present application will become apparent in the following description, or can be learned by practice of the present application.

**BRIEF DESCRIPTION OF THE DRAWINGS**

The aspects and/or additional aspects and advantages of the present application will become apparent and comprehensible from the description of embodiments in conjunction with the accompanying drawings below.

Fig. 1 shows a schematic structural diagram of a stator lamination according to an embodiment of the present application;

Fig. 2 shows a schematic structural diagram of a stator lamination according to an embodiment of the present application;

Fig. 3 shows a schematic structural diagram of a magnetic conduction portion of a stator lamination according to an embodiment of the present application;

Fig. 4 shows a schematic structural diagram of a magnetic conduction portion of a stator lamination according to an embodiment of the present application;

Fig. 5 shows a schematic structural diagram of a magnetic conduction portion of a stator lamination according to an embodiment of the present application;

Fig. 6 shows a schematic structural diagram of a stator lamination according to an embodiment of the present application;

Fig. 7 shows a schematic structural diagram of a core lamination according to an embodiment of the present application; and

Fig. 8 shows a schematic structural diagram of a compressor according to an embodiment of the present application.

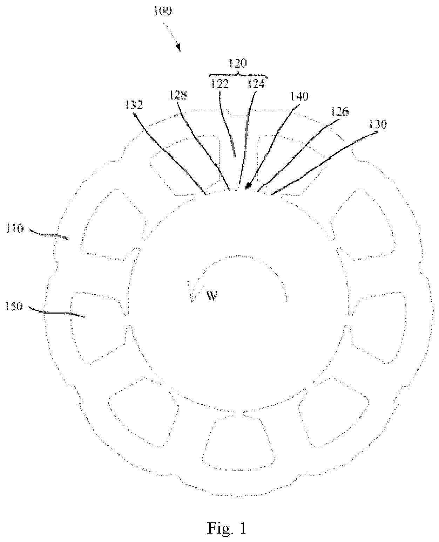

A corresponding relation between reference numbers and component names in Figs. 1-8 is as follows: 100 stator lamination, 110 stator yoke, 120 stator tooth, 122 tooth root, 124 tooth crown, 126 first tooth surface, 128 second tooth surface, 130 first end, 132 second end, 140 magnetic conduction portion, 150 stator slot, 200 core lamination, 300 compressor, 310 rotor, 320 crank axle, 330 first bearing, 340 second bearing, 350 air cylinder, and 360 piston.

**DETAILED DESCRIPTION OF THE DISCLOSURE**

To make the above objectives, features, and advantages of the present application more apparent and comprehensible, the present application will be described in detail below with reference to accompanying drawings and exemplary embodiments. It should be noted that embodiments in the present application and features in the embodiments can be combined with one another if there is no conflict.

Many details are set forth in the following description to facilitate full understanding of the present application, but the present application can also be implemented in other ways different from those described herein, and therefore, the protection scope of the present application is not limited by the particular embodiments disclosed below.

With reference to Figs. 1-8, a stator lamination 100, a stator core, an electric motor, a compressor 300 and a refrigeration device according to some embodiments of the present application will be described below.

Embodiment 1:

As shown in Figs. 1-5, the present application provides a stator lamination 100, which includes a stator yoke 110 and stator teeth 120. The stator yoke 110 has an annular structure. The number of the stator teeth 120 is multiple, and the plurality of stator teeth 120 are evenly distributed on an inner ring of the stator yoke 110. Stator slots 150 are provided between adjacent stator teeth 120, and windings may be arranged in the stator slots 150. The plurality of stator teeth 120 are arranged in a surrounding manner to form a space for allowing a rotor 310 to be arranged.

After an electric motor is assembled, a magnet on the rotor 310 is located in a magnetic field generated after the winding is powered on, and further rotates due to influence of a magnetic force generated by the winding.

Further, the stator tooth 120 includes a tooth root 122 and a tooth crown 124. The tooth root 122 is connected between the tooth crown 124 and the stator yoke 110 That is, one end of the tooth root 122 is connected to the stator yoke 110, and one end opposite the end connected to the stator yoke 110 is connected to the tooth crown 124.

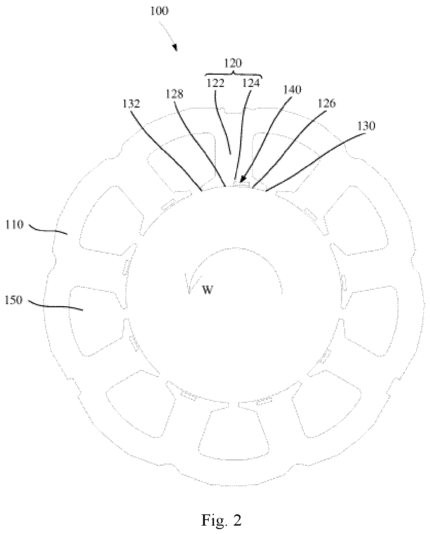

Along a circumference of the stator yoke 110, two ends of the tooth crown 124 are a first end 130 and a second end 132, respectively. In an embodiment, after the electric motor is mounted, as shown in Figs. 1 and 2, when the rotor 310 rotates along direction W, any point, on a circumferential side of the rotor 310, in a space formed by the stator laminations 100 may pass the first end 130 and then the second end 132.

In addition, the tooth crown 124 of the stator tooth 120 is provided with a magnetic conduction portion 140. Along a circumferential direction of the stator yoke 110, the shortest distance between the contour line of the magnetic conduction portion 140 facing away from the tooth root 122 and facing toward the first end 130 of the tooth crown 124 and the first end 130 of the tooth crown 124 is smaller than the shortest distance between the contour line of the magnetic conduction portion 140 facing away from the tooth root 122 and facing toward the second end 132 of the tooth crown 124 and the second end 132 of the tooth crown 124. That is, the magnetic conduction portion 140 is close to the first end 130. Therefore, when the rotor 310 rotates to enter the stator teeth 120, voltage drop in a magnetic circuit at an initial position increases. In this way, a local saturation effect is reduced, and distortion of an air-gap magnetic field is weakened. Even harmonics of an armature magnetic field are suppressed, and radial electromagnetic waves generated through interaction between the harmonics of the armature magnetic field and harmonics of a magnetic field of the rotor 310 are significantly reduced. Further, vibration noise of a compressor 300 in key frequency bands is reduced and noise of the electric motor is reduced.

In an embodiment, the magnetic conduction portion 140 is equivalent to increase in the number of stator slots 150, and the number of basic cogging torque is increased. As the number of harmonics increases, amplitudes of corresponding magnetic potential harmonics and magnetic conductance harmonics decrease, and cogging torque decreases accordingly. In this way, noise of the electric motor or compressor 300 is reduced.

Embodiment 2:

As shown in Figs. 1 and 2, based on Embodiment 1, further, a shortest distance between a contour line of a magnetic conduction portion 140 facing away from a tooth root 122 and facing toward a second end 132 of a tooth crown 124 and a first end 130 of the tooth crown 124 is smaller than the shortest distance between the contour line of the magnetic conduction portion 140 facing away from the tooth root 122 and facing toward the second end 132 of the tooth crown 124 and the second end 132 of the tooth crown 124.

In the embodiment, the magnetic conduction portion 140 is further limited to be completely located at one side from a center line of the tooth root 122 to the first end 130, and a radial electromagnetic force received by a rotor 310 when the rotor initially enters stator teeth 120 is further ensured, and a noise reduction effect is further improved.

In an embodiment, the tooth root 122 has a central symmetrical structure. The tooth root 122 is symmetrically arranged with one diameter of a stator yoke 110 as a symmetrical axis. The magnetic conduction portion 140 is completely arranged at a part from the symmetrical axis of the tooth root 122 to the first end 130.

Embodiment 3:

As shown in Figs. 1 and 2, based on Embodiment 1 or 2, further, a magnetic conduction portion 140 is conductive along an axial direction of a tooth crown 124.

In the embodiment, the magnetic conduction portion 140 is conductive along the axial direction of the tooth crown 124, which is more conducive to penetration of a magnetic induction line. In this way, distortion of an air-gap magnetic field is further minimized, and even harmonics of an armature magnetic field are suppressed.

Embodiment 4:

As shown in Fig. 2, based on any one of Embodiments 1-3, a magnetic conduction portion 140 includes a magnetic conduction hole.

In the embodiment, the magnetic conduction portion 140 may be the magnetic conduction hole, which is a channel provided on a tooth crown 124 along an axial direction of a stator yoke 110, and one side of the tooth crown 124 facing away from a tooth root 122 is complete.

Embodiment 5:

As shown in Fig. 1, based on any one of Embodiments 1-4, further, a magnetic conduction portion 140 includes: a magnetic conduction recess, where an opening of the magnetic conduction recess is located at one side of a tooth crown 124 facing away from a tooth root 122.

In the embodiment, the magnetic conduction portion 140 may be the magnetic conduction recess, that is, a recess is provided on one side of the tooth crown 124 facing toward an axis of a stator yoke 110.

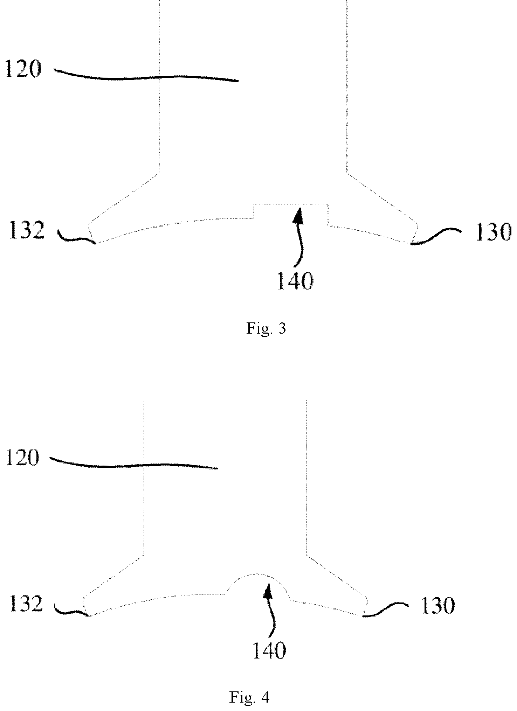

In an embodiment, as shown in Fig. 3, a structure of the magnetic conduction portion 140 may be a part of a rectangular structure. That is, two adjacent surfaces of the magnetic conduction portion 140 are perpendicular to each other.

As shown in Fig. 4, a structure of the magnetic conduction portion 140 may be a part of a circular structure. That is, one surface of the magnetic conduction portion 140 is curved.

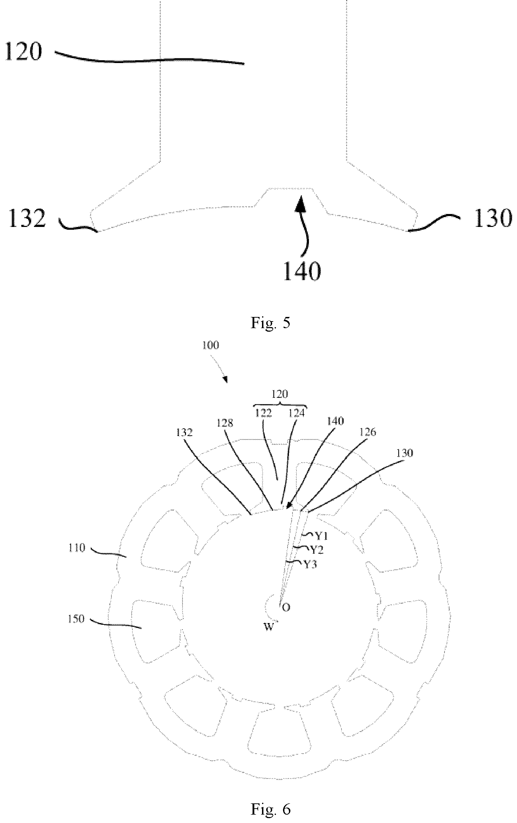

As shown in Fig. 5, a structure of the magnetic conduction portion 140 may be a part of a trapezoidal structure. That is, two adjacent surfaces of the magnetic conduction portion 140 are not perpendicular to each other. In an embodiment, there may be an acute angle or an obtuse angle between the two adjacent surfaces.

Embodiment 6:

As shown in Figs. 1 and 2, based on any one of Embodiments 1-5, further, along a direction from a first end 130 to a second end 132, the end face of one side of a tooth crown 124 facing away from a tooth root 122 includes a first tooth surface 126 and a second tooth surface 128. The second tooth surface includes at least one section of a second arc surface. An axis of the second arc surface is not coincident with an axis of an inscribed circle of a plurality of stator teeth.

In an embodiment, the second tooth surface 128 may be a complete arc surface, and the axis of the second tooth surface 128 is not coincident with a rotation center of a rotor 310.

In the embodiment, the axis of the second tooth surface 128 is not coincident with the axis of the inscribed circle of the plurality of stator teeth 120, and an air gap between the second tooth surface 128 and the rotor 310 is changeable. In this way, it is ensured that an air gap flux density is changeable and a radial force generated for the rotor 310 under the same air gap flux density is reduced.

Embodiment 7:

As shown in Figs. 1 and 2, based on any one of Embodiments 1-6, further, a first tooth surface 126 includes at least one section of a first arc surface. An axis of the first arc surface is coincident with an axis of an inscribed circle of a plurality of stator teeth 120.

In an embodiment, the entire first tooth surface 126 is an arc surface, and an axis of the first tooth surface 126 is coincident with a rotation axis of a rotor 310.

In the embodiment, the axis of the first tooth surface 126 is coincident with the axis of the inscribed circle of the plurality of stator teeth 120. In this way, an air gap between the first tooth surface 126 and the rotor 310 is even, and further, an electromagnetic force applied to the rotor 310 is ensured and efficiency of an electric motor is improved.

Embodiment 8:

As shown in Fig. 6, based on any one of Embodiment 6 or 7, further, along a direction from a first end 130 to a second end 132, a distance between a first tooth surface 126 and a center of an inscribed circle of a plurality of stator teeth 120 gradually decreases.

In the embodiment, after an electric motor is assembled, the center of the inscribed circle of the plurality of stator teeth 120 serves as a rotation center of a rotor 310. Further, along the direction from the first end 130 to the second end 132, a distance between the first tooth surface 126 and the rotation center of the rotor 310 gradually decreases. In this way, voltage drop in a magnetic circuit at the first end 130 is further increased, a local saturation effect is further reduced, and distortion of an air-gap magnetic field is weakened. Even harmonics of an armature magnetic field are suppressed, radial electromagnetic waves generated through interaction between the harmonics of the armature magnetic field and harmonics of a magnetic field of the rotor are significantly reduced, further vibration noise of a compressor in key frequency bands is reduced, and noise of the electric motor is reduced.

In an embodiment, as shown in Fig. 6, along a rotation direction of the rotor, between the rotation center O of the rotor and the first tooth surface, three straight lines Y1, Y2 and Y3 are selected. Y1 is 29.3043 cm, Y2 is 29.1696 cm, and Y3 is 29.0376 cm.

Embodiment 9:

As shown in Figs. 1 and 2, based on any one of Embodiments 1-8, further, a first tooth surface 126 includes at least one section of a first arc surface. An axis of the first arc surface is not coincident with an axis of an inscribed circle of a plurality of stator teeth 120.

In the embodiment, one side of a tooth crown 124 facing toward the axis of the inscribed circle of the plurality of stator teeth 120 has different axes, and an air gap between the first tooth surface 126 and a rotor is changeable. In this way, even harmonics of an armature magnetic field are further reduced, a radial force on the rotor is further reduced, and noise of an electric motor or a compressor is further reduced.

Embodiment 10:

Based on any one of Embodiments 1-9, further, the ratio of the outer diameter of a stator yoke 110 to the minimum inner diameter defined by end faces of stator teeth 120 is greater than or equal to 0.5 and smaller than or equal to 0.57.

That is, the ratio of an outer diameter of a stator lamination 100 to an inner diameter of the stator lamination 100 is greater than or equal to 0.5 and smaller than or equal to 0.57.

In the embodiment, the ratio of the outer diameter of the stator yoke 110 to the minimum inner diameter defined by the end faces of the stator teeth 120 is greater than or equal to 0.5 and smaller than or equal to 0.57. In this way, material consumption of the stator lamination 100 is reduced and cost of the stator lamination 100 is reduced while it is ensured that the stator lamination 100 has an enough winding space and an enough space for a rotor 310 to be arranged.

Embodiment 11:

The present application provides a stator core, which includes at least one stator lamination 100 according to any one of the embodiments.

The stator core provided by the present application includes the at least one stator lamination 100 according to any one of the embodiments, so the stator core has all the beneficial effects of the stator lamination 100 according to any one of the above embodiments, which will not be described in details herein.

In an embodiment, the stator core includes a plurality of stator laminations 100. The plurality of stator laminations 100 are stacked along an axial direction of the stator core.

Embodiment 12:

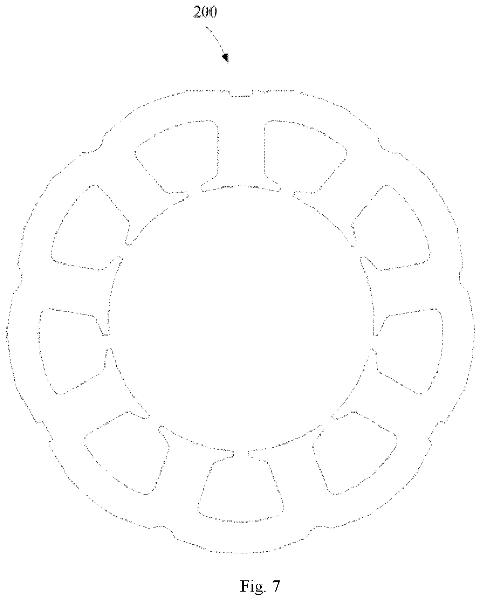

As shown in Fig. 7, based on Embodiment 11, further, the stator core further includes: at least one core lamination 200. The core lamination 200 and a stator lamination 100 are stacked along an axial direction of the stator core.

In the embodiment, the stator core may further include core laminations 200 having other structures. In this way, a magnetic field may be more diverse, and an effect of the stator core is expanded.

In some embodiments, the core lamination 200 and the stator lamination 100 may be stacked in any way. In an embodiment, the core laminations 200 are stacked at two ends of the stator lamination 100. In another embodiment, the stator laminations 100 are stacked at two ends of the core lamination 200. In a further embodiment, the core laminations 200 are stacked at one side of the stator lamination 100. In another further embodiment, the stator laminations 100 and the core laminations 200 are stacked alternately.

Embodiment 13:

Based on Embodiment 11 or 12, further, along an axial direction of a stator core, a total height of stator laminations 100 is L1; and along the axial direction of the stator core, a total height of core laminations 200 is L2. $0.001 \leq L2/L1 \leq 0.6$.

In the embodiment, different vibration noise improvement effects on electric motors may be achieved by assembling two types of laminations according to different axial thicknesses. The greater the total height of the stator laminations 100 with magnetic conduction recesses, the better the noise improvement effect, the greater the total height of the core laminations 200, and the higher energy efficiency of the electric motor. Both the higher energy efficiency and the better noise reduction effect of the electric motor may be achieved when $0.001 \leq L2/L1 \leq 0.6$.

In an embodiment, $\dfrac{L2}{L1}$ is equal to 0.001, 0.002, 0.003, 0.004, 0.005, 0.006, 0.007, 0.008, 0.009, 0.1, 0.2, 0.3, 0.4, 0.5, or 0.6.

Embodiment 14:

The present application provides an electric motor, which includes the stator core according to any one of the above embodiments, and a rotor 310 rotatably arranged in the stator core.

The electric motor provided by the present application includes the stator core according to any one of the above embodiments, so the electric motor has all the beneficial effects of the stator core according to any one of the above embodiments, which will not be described in details herein.

In an embodiment, the electric motor includes a stator. The stator includes the stator core according to any one of the above embodiments, and a winding arranged on the stator core.

The rotor 310 includes a rotor core and a magnet arranged on the rotor core. After powered on, a winding may generate a magnetic field to drive the magnet to rotate.

Embodiment 15:

Based on Embodiment 14, further, a rotor 310 rotates from a first tooth surface 126 to a second tooth surface 128 of a stator tooth 120 of a stator lamination 100 of a stator core. That is, the rotor 310 rotates from a first end 130 to a second end 132 of the stator tooth 120 of the stator lamination 100 of the stator core.

In the embodiment, the rotor 310 rotates from the first tooth surface 126 to the second tooth surface 128 of the stator tooth 120 of the stator lamination 100 of the stator core, and when the rotor 310 passes the first tooth surface 126 first, a width of an air gap may increase, and the increased width of the air gap may lead to increase in voltage drop in a magnetic circuit. Further, magnetic saturation at the first tooth surface 126 is reduced, a local saturation effect is reduced, and distortion of an air-gap magnetic field is weakened. Even harmonics of an armature magnetic field are suppressed, and radial electromagnetic waves generated through interaction between the harmonics of the armature magnetic field and harmonics of a magnetic field of the rotor 310 are significantly reduced. Further, vibration noise of a compressor 300 in key frequency bands is reduced and noise of an electric motor is reduced.

Embodiment 16:

Based on Embodiment 14 or 15, further, an inner diameter of a stator core is Di, rated torque of an electric motor is T, and torque per unit volume of a rotor 310 is TPV, where $5.18 \times 10^{-7} \leq T \times Di^{-3} \times TPV^{-1} \leq 1.17 \times 10^{-6}$, and 5 kN·m·m$^{-3} \leq$ TPV $\leq$ 45 kN·m·m$^{-3}$.

In an embodiment, the unit of the rated torque T of the electric motor is N·m, the unit of the inner diameter Di of the stator core is mm, and the unit of the torque per unit volume TPV of the rotor 310 is kN·m·m$^{-3}$.

In the embodiment, the inner diameter Di of the stator core, the rated torque T of the electric motor and the torque per unit volume TPV of the rotor 310 satisfy $5.18 \times 10^{-7} \leq T \times Di^{-3} \times TPV^{-1} \leq 1.17 \times 10^{-6}$ and 5 kN·m·m$^{-3} \leq$ TPV $\leq$ 45 kN·m·m$^{-3}$. Further, a range of combined variables of the rated torque T of the electric motor, the inner diameter Di of the stator core and the torque per unit volume TPV of the rotor 310 is limited, and the electric motor may satisfy a power requirement of a high-intensity environment, in some embodiments, a compressor 300.

In addition, the structure may effectively reduce magnetic flux leakage of the rotor 310, increase a use ratio of permanent magnets, and improve efficiency of the electric motor.

Embodiment 17:

Based on Embodiment 14 or 15, further, stator slots 150 are formed between adjacent stator teeth 120 of a stator core, and the ratio of the number of the stator slots 150 to 2 times of the number of pole pairs of a rotor 310 is any of the following: $\frac{3}{2}$, $\frac{6}{5}$, and $\frac{7}{6}$.

In the embodiment, the ratio relation between the number Z of stator slots 150 and the number P of pole pairs of the rotor 310 is limited, and further a pole and slot combination of an electric motor is limited. When Z and 2×P satisfy $\frac{3}{2}$, $\frac{6}{5}$, or $\frac{7}{6}$, armature iron loss may be effectively reduced, magnetic flux is improved, and further efficiency of the electric motor is improved.

In an embodiment, the electric motor may be a 6-pole 9-slot motor, a 4-pole 6-slot motor, an 8-pole 12-slot motor, or a 10-pole 12-slot motor.

Embodiment 18:

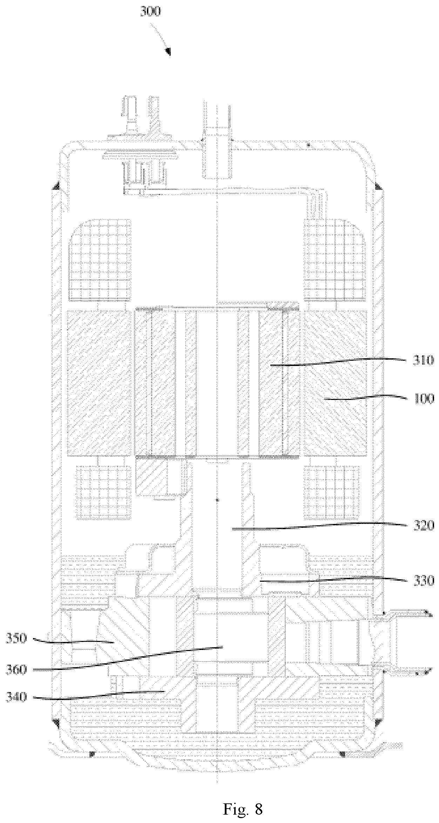

As shown in Fig. 8, the present application provides a compressor 300, which includes the stator core according to any one of the above embodiments, or the electric motor according to any one of the above embodiments.

The compressor 300 provided by the present application includes the stator core according to any one of the above embodiments or the electric motor according to any one of the above embodiments, so the compressor has all the beneficial effects of the stator core according to any one of the above embodiments and the electric motor according to any one of the above embodiments, which will not be described in details herein.

Embodiment 19:

As shown in Fig. 8, based on Embodiment 18, further, a compressor 300 further includes a crank axle 320 penetrating a rotor core of a rotor 310 and connected to the rotor core; and a power portion connected to the crank axle 320. The power portion is configured to rotate along with the rotor 310 to compress a medium.

In an embodiment, the power portion includes a piston 360 and an air cylinder 350. The piston is arranged in the air cylinder 350 and connected to the crank axle 320. The crank axle 320 is provided with a first bearing 330 and a second bearing 340. The first bearing 330 and the second bearing 340 are located at two ends of the power portion respectively.

Embodiment 20:

The present application provides a refrigeration device, which includes the stator core according to any one of the above embodiments, or the electric motor according to any one of the above embodiments, or the compressor 300 according to any one of the above embodiments.

The refrigeration device provided by the present application includes the stator core according to any one of the above embodiments, or the electric motor according to any one of the above embodiments, or the compressor 300 according to any one of the above embodiments, so the refrigeration device has all the beneficial effects of the stator core according to any one of the above embodiments, the electric motor according to any one of the above embodiments, and the compressor 300 according to any one of the above embodiments, which will not be described in details herein.

In an embodiment, the refrigeration device further includes a heat exchanger and a throttling member, and further a heat exchange loop is formed by the heat exchanger, the throttling member and the compressor 300. Further, the heat exchanger includes a condenser and an evaporator.

The refrigeration device includes a refrigerator, a freezer, an air conditioner, or other heat exchange devices.

Embodiment 21:

As shown in Figs. 1 and 2, an embodiment of the present application provides a stator core, which is applied to an electric motor. In an embodiment, the electric motor includes a stator. The stator includes a stator core. The stator core surrounds a rotor 310. The stator core includes a stator lamination 100.

In an embodiment, the stator lamination 100 includes a plurality of stator teeth 120. The stator teeth 120 are arranged on one side of the stator core facing toward the rotor 310. The plurality of stator teeth 120 are arranged along a circumferential direction of the stator core. Stator slots 150 are defined between adjacent stator teeth 120 to facilitate coil winding on the stator core. With a rotation center of the rotor 310 as a center of a circle, a circle where points on a contour of a farthest end of one side, along a rotation direction of the rotor 310, of a tooth crown 124 of the stator tooth 120 closest to the rotation center of the rotor 310 are located is defined as a first base circle. A magnetic conduction portion 140, in an embodiment a magnetic conduction modulation groove, is arranged near one side of the tooth crown 124 of the stator tooth 120 of the stator lamination 100 facing toward the rotor 310.

Along a direction in which the magnetic conduction modulation groove deviates to a direction in which the rotor 310 rotates to enter the stator teeth 120, at least one section of a contour line of one side of the tooth crown 124 of the stator tooth 120 facing toward the rotor 310 is not coincident with the first base circle. By using the structure of the stator lamination 100, even harmonics of an armature magnetic field are suppressed, and radial electromagnetic waves generated through interaction between the harmonics of the armature magnetic field and harmonics of a magnetic field of the rotor 310 are significantly reduced. Further, vibration noise of a compressor 300 in key frequency bands is reduced and a hearing feeling of the compressor 300 is effectively improved.

Further, the magnetic conduction modulation groove deviates from a center line of the stator tooth 120 and is arranged on a side opposite the rotation direction of the rotor 310 of an electric motor, which is the side where the rotor 310 enters the stator tooth 120.

Further, the magnetic conduction modulation groove is in communication with an air gap of the electric motor or not.

Further, at the side of arranging the magnetic conduction modulation groove opposite the rotation direction of the rotor 310, that is, the side where the rotor 310 enters the stator tooth 120, a contour line of one side of the tooth crown 124 of the stator tooth 120 facing toward the rotor 310 is an arc. A center of the arc is coincident with the rotation center of the rotor 310.

Further, along a direction in which the magnetic conduction modulation groove deviates to the rotation direction of the rotor 310, a contour line of one side of the tooth crown 124 of the stator tooth 120 facing toward the rotor 310 is an arc. A center of the arc is not coincident with the rotation center of the rotor 310.

Embodiment 22:

The present application further provides an electric motor, which includes the stator core according to any one of the above embodiments.

The electric motor provided by the present application includes the stator core according to any one of the above embodiments, so the electric motor has all the beneficial effects of the stator core.

The electric motor includes a stator. The stator includes the stator core. The stator core surrounds a rotor 310. One sides of a plurality of stator cores facing toward a rotor core are provided with a plurality of stator teeth 120. The plurality of stator teeth 120 are arranged along a circumferential direction of the stator core. Stator slots 150 are defined between adjacent teeth. A coil is wound around the stator tooth 120 to form a winding. The number of the stator slots 150 is Z, the number of pole pairs of the rotor 310 is P, and the ratio of Z to 2P is equal to $\frac{3}{2}, \frac{6}{5}$, or $\frac{7}{6}$.

In the embodiment, the stator includes the stator core. The stator core is provided with the stator teeth 120. The stator slots 150 are defined between the adjacent stator teeth 120. Coils are wound around the stator teeth 120. The stator core surrounds the rotor 310. The ratio relation between the number Z of stator slots 150 and the number P of pole pairs of the rotor 310 is limited, and further a pole and slot combination of the electric motor is limited. If the number of pole pairs of the rotor 310 is P, the number of poles of the rotor 310 is 2P. That is, the electric motor may be a 6-pole 9-slot motor, a 4-pole 6-slot motor, an 8-pole 12-slot motor, or a 10-pole 12-slot motor. The above type of electric motors may effectively reduce armature iron loss, improve magnetic flux, and further improve efficiency of the electric motor.

Further, an inner diameter Di of the stator core, rated torque T of the electric motor and torque per unit volume TPV of the rotor 310 satisfy the following relational expressions: $5.18 \times 10^{-7} \leq T \times Di^{-3} \times TPV^{-1} \leq 1.17 \times 10^{-6}$, and $5$ kN·m·m$^{-3} \leq TPV \leq 45$ kN·m·m$^{-3}$.

The unit of the rated torque T of the electric motor is N·m, the unit of the inner diameter Di of the stator core is mm, and the unit of the torque per unit volume TPV of the rotor 310 is kN·m·m$^{-3}$.

In the embodiment, the rated torque T of the electric motor, the inner diameter Di of the stator core and the torque per unit volume TPV of the rotor 310 satisfy $5.18 \times 10^{-7} \leq T \times Di^{-3} \times TPV^{-1} \leq 1.17 \times 10^{-6}$, and a range of the torque per unit volume TPV satisfies $5$ kN·m·m$^{-3} \leq TPV \leq 45$ kN·m·m$^{-3}$. A range of combined variables of the rated torque T of the electric motor, the inner diameter Di of the stator core and the torque per unit volume TPV of the rotor 310 is limited, and the electric motor may satisfy a power requirement of a compressor 300. In addition, for the electric motor and the compressor 300 using the rotor 310, magnetic flux leakage of the rotor 310 may be effectively reduced, a use ratio of permanent magnets is increased, and efficiency of the electric motor is improved.

Further, one sides of the plurality of stator teeth 120 facing toward a rotor core form an inner side wall of the stator core. The ratio of the minimum diameter of the inner side wall of the stator core to a diameter of an outer side wall of the stator core is greater than 0.5 and smaller than or equal to 0.57.

In the embodiment, the ratio of a diameter of an inner side wall of the stator to the diameter of the outer side wall of the stator core is greater than 0.5 and smaller than or equal to 0.57, and the electric motor has high cost performance.

Embodiment 23:

As shown in Fig. 8, the present application further provides a compressor 300, which includes the stator core according to any one of the above embodiments, or the electric motor according to any one of the above embodiments.

The compressor 300 provided by the present application includes the stator core according to any one of the above embodiments or the electric motor according to any one of the above embodiments, so the compressor has all the beneficial effects of the stator core and the electric motor.

Further, the compressor 300 further includes a crank axle 320 penetrating a rotor core of a rotor 310 and connected to the rotor core; and a power portion connected to the crank axle 320. The power portion is configured to compress a medium and rotate along with the electric motor.

In the embodiment, the compressor 300 further includes the crank axle 320 and the power portion. The crank axle 320 penetrates the rotor core of the rotor 310. The crank axle 320 is connected to the rotor core and the power portion. Further, the electric motor may work to drive the power portion to move to compress a medium, in some embodiments, a refrigerant.

In an embodiment, the crank axle 320 of the compressor 300 is connected to the rotor core through an axle hole of the rotor core.

In an embodiment, the compressor 300 further includes a main bearing and an auxiliary bearing. The power portion further includes an air cylinder 350 and a piston 360. One end of the crank axle 320 penetrates the rotor 310, and the other end of the crank axle sequentially penetrates the main bearing, the air cylinder 350 and the auxiliary bearing.

Embodiment 24:

The present application further provides a refrigeration device, which includes the stator core according to any one of the above embodiments, or the electric motor according to any one of the above embodiments, or the compressor 300 according to any one of the above embodiments.

The refrigeration device provided by the present application includes the stator core according to any one of the above embodiments, or the electric motor according to any one of the above embodiments, or the compressor 300 according to any one of the above embodiments, so the refrigeration device has all the beneficial effects of the stator core, or the electric motor, or the compressor 300.

In the present application, the terms "first", "second" and "third" are merely used for description, and cannot be understood as indicating or implying relative importance; and the term "a plurality of" refers to two or more, unless otherwise explicitly defined. The terms "mount", "connection", "connected", "fix", etc. are to be construed broadly. For example, the "connected" may be fixedly connected, or detachably connected, or integrally connected. The "connection" may be direct connection, or indirect connection through an intermediary medium. For those of ordinary skills in the art, the specific meanings of the foregoing terms in the present application can be understood according to specific circumstances.

In the description of the present application, it should be understood that the orientation or positional relations indicated by the terms "upper", "lower", "left", "right", "front", "rear", etc. are based on the orientation or positional relations shown in the accompanying drawings, are merely for facilitating the description of the present application and simplifying the description, rather than indicating or implying that an apparatus or member referred to must have a particular orientation or be constructed and operated in a particular orientation, and therefore cannot be interpreted as limiting the present application.

In the description, the terms "an embodiment", "some embodiments", "particular embodiment", etc. indicate that specific features, structures, materials or characteristics described in conjunction with the embodiment or illustrative description are included in at least one embodiment or illustrative embodiment of the present application. In the description, the schematic descriptions of the above terms do not necessarily refer to the same embodiment or illustrative embodiment. Moreover, the specific features, structures, materials or characteristics described may be combined in a suitable manner in any one or more embodiments or illustrative embodiments.

The foregoing is merely illustrative of the preferred embodiments of the present application and is not intended to limit the present application, and various changes and modifications can be made by those skilled in the art. Any modifications, equivalent substitutions, improvements, etc. made within the spirit and principle of the present application should fall within the scope of protection of the present application.

**Claims**

1. A stator lamination, comprising:

    a stator yoke, which has an annular structure; and
    a plurality of stator teeth arranged on an inner ring of the stator yoke, wherein
    the stator tooth comprises:

       a tooth root connected to the stator yoke; and
       a tooth crown connected to the tooth root, wherein in a circumferential direction of the stator yoke, two ends of the tooth crown are a first end and a second end respectively; and
       at least one tooth crown is provided with a magnetic conduction portion, and along the circumferential direction of the stator yoke, a shortest distance between the first end (130) and a contour line of the magnetic conduction portion facing away from the tooth root and facing toward the first end of the tooth crown is smaller than a shortest distance between the second end (132) and a contour line of the magnetic conduction portion facing away from the tooth root and facing toward the second end of the tooth crown.

2. The stator lamination according to claim 1, wherein

in a direction from the first end to the second end, an end face of one side of the tooth crown facing away from the tooth root comprises a first tooth surface and a second tooth surface, the first end is located at an edge of the first tooth surface, the second tooth surface comprises at least one section of a second arc surface, and an axis of the second arc surface is not coincident with an axis of an inscribed circle of the plurality of stator teeth.

3. The stator lamination according to claim 1, wherein the magnetic conduction portion is conductive in an axial direction of the tooth crown.

4. The stator lamination according to any one of claims 1-3, wherein the magnetic conduction portion comprises:

   a magnetic conduction hole, or
   a magnetic conduction recess, wherein an opening of the magnetic conduction recess is located at one side of the tooth crown facing away from the tooth root.

5. The stator lamination according to claim 2, wherein the first tooth surface comprises at least one section of a first arc surface, wherein an axis of the first arc surface is not coincident with the axis of the inscribed circle of the plurality of stator teeth.

6. The stator lamination according to claim 2, wherein the first tooth surface comprises at least one section of a first arc surface, wherein an axis of the first arc surface is coincident with the axis of the inscribed circle of the plurality of stator teeth.

7. The stator lamination according to any one of claims 1 to 3, wherein
   a ratio of an outer diameter of the stator yoke to a minimum inner diameter defined by end faces of the plurality of stator teeth is greater than or equal to 0.5 and smaller than or equal to 0.57.

8. The stator lamination according to claim 2, wherein in the direction from the first end to the second end, a distance between the first tooth surface and a center of the inscribed circle of the plurality of stator teeth gradually decreases.

9. A stator core, comprising:
   at least one stator lamination according to any one of claims 1-8.

10. The stator core according to claim 9, further comprising:
    at least one core lamination, wherein the core lamination and the stator lamination are stacked in an axial direction of the stator core.

11. The stator core according to claim 10, wherein

    in the axial direction of the stator core, a total height of the stator laminations is L1; and
    in the axial direction of the stator core, a total height of the core laminations is L2, wherein

$$0.001 \leq L1/L2 \leq 0.6.$$

12. An electric motor, comprising:

    a stator core according to any one of claims 9-11; and
    a rotor rotatably arranged in the stator core.

13. The electric motor according to claim 12, wherein the rotor rotates in a direction from the first end to the second end of the stator tooth of the stator lamination of the stator core.

14. The electric motor according to claim 12 or 13, wherein

    an inner diameter of the stator core is Di, a rated torque of the electric motor is T, and a torque per unit volume of the rotor is TPV, wherein $5.18 \times 10^{-7} \leq T \times Di^{-3} \times TPV^{-1} \leq 1.17 \times 10^{-6}$, $5$ kN·m·n$^{-3} \leq$ TPV $\leq 45$ kN·m·m$^{-3}$, the unit of the inner diameter Di of the stator core is mm, the unit of the rated torque T of the electric motor is N·m, and the unit of the torque per unit volume TPV of the rotor is kN·m·m$^{-3}$.

15. The electric motor according to claim 12 or 13, wherein
    stator slots are formed between adjacent stator teeth of the stator core, and a ratio of a number of the stator slots to 2 times of a number of pole pairs of the rotor is any one of the following:

$$\frac{3}{2}, \frac{6}{5}, \text{ and } \frac{7}{6}.$$

16. A compressor, comprising:

    a stator core according to any one of claims 9 to 11, or
    an electric motor according to any one of claims 12 to 15.

17. A refrigeration device, comprising:

    a stator core according to any one of claims 9 to 11, or
    an electric motor according to any one of claims 12 to 15, or
    a compressor according to claim 16.

Fig. 1

Fig. 2

120

132                    130

140

Fig. 3

120

132                    130

140

Fig. 4

Fig. 5

Fig. 6

200

Fig. 7

300

310

100

320

330

350

360

340

Fig. 8

## INTERNATIONAL SEARCH REPORT

| | International application No. |
|---|---|
| | **PCT/CN2020/134782** |

| A. | CLASSIFICATION OF SUBJECT MATTER |
|---|---|
| | H02K 1/12(2006.01)i |

According to International Patent Classification (IPC) or to both national classification and IPC

| B. | FIELDS SEARCHED |
|---|---|

Minimum documentation searched (classification system followed by classification symbols)

    H02K

Documentation searched other than minimum documentation to the extent that such documents are included in the fields searched

Electronic data base consulted during the international search (name of data base and, where practicable, search terms used)

    CNPAT, CNKI, IEEE, EPODOC, WPI: 定子, 齿冠, 齿顶, 凹槽, 凹斜槽, 磁导孔, 降噪, 电机, stator, crown, crest, groove, flute, permeance, hole, noise, reduction, motor

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 208623399 U (ZHUHAI KAIBANG MOTOR MANUFACTURING CO., LTD. et al.) 19 March 2019 (2019-03-19)<br>    description, paragraphs [0031]-[0077], and figures 1-3 | 1-17 |
| A | CN 103683562 A (MIDEA GROUP CO., LTD.) 26 March 2014 (2014-03-26)<br>    entire document | 1-17 |
| A | CN 102810965 A (CHUNCHENG HOLDING GROUP CO., LTD.) 05 December 2012 (2012-12-05)<br>    entire document | 1-17 |
| A | CN 108768003 A (GREE ELECTRIC APPLIANCES, INC. OF ZHUHAI et al.) 06 November 2018 (2018-11-06)<br>    entire document | 1-17 |
| A | CN 208272722 U (HUZHOU YUEQIU MOTOR CO., LTD.) 21 December 2018 (2018-12-21)<br>    entire document | 1-17 |
| A | US 2013038165 A1 (ZHONGSHAN BROAD-OCEAN MOTOR MANUFACTURING CO., LTD.) 14 February 2013 (2013-02-14)<br>    entire document | 1-17 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **17 June 2021** | **24 June 2021** |

| Name and mailing address of the ISA/CN | Authorized officer |
|---|---|
| **China National Intellectual Property Administration (ISA/ CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2020/134782**

| Patent document cited in search report | | | Publication date (day/month/year) | Patent family member(s) | | | Publication date (day/month/year) |
|---|---|---|---|---|---|---|---|
| CN | 208623399 | U | 19 March 2019 | None | | | |
| CN | 103683562 | A | 26 March 2014 | CN | 103683562 | B | 31 August 2016 |
| CN | 102810965 | A | 05 December 2012 | None | | | |
| CN | 108768003 | A | 06 November 2018 | CN | 208401638 | U | 18 January 2019 |
| CN | 208272722 | U | 21 December 2018 | None | | | |
| US | 2013038165 | A1 | 14 February 2013 | US | 8564166 | B2 | 22 October 2013 |
| | | | | CN | 102931795 | A | 13 February 2013 |
| | | | | CN | 102931795 | B | 12 November 2014 |

Form PCT/ISA/210 (patent family annex) (January 2015)

**EP 4 236 034 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202011376547
- CN 202011415684